# EUROPÄISCHE PATENTSCHRIFT

(11) **EP 2 028 510 B1**
(45) Veröffentlichungstag und Bekanntmachung des Hinweises auf die Patenterteilung: **08.05.2013**
(21) Anmeldenummer: 08005609.6
(22) Anmeldetag: 26.03.2008
(51) Int. Cl.: G02B 6/00, F21V 8/00

(54) **Beleuchtungseinrichtung, insbesondere für Fahrzeuge**
Lighting device, in particular for vehicles
Dispositif d'éclairage, en particulier pour véhicules

(30) Priorität: 26.03.2007 DE 102007014871
(43) Veröffentlichungstag der Anmeldung: 25.02.2009
(73) Patentinhaber: Schott AG, 55122 Mainz (DE)
(72) Erfinder: Hatzenbühler, Andreas, 55599 Siefersheim (DE); Danielzik, Burkhard, 55411 Bingen (DE)
(74) Vertreter: Herden, Andreas F.

(56) Entgegenhaltungen:
- EP-A1- 1 091 166
- WO-A1-2006/033029
- WO-A2-03/021329
- DE-A1- 4 439 547
- DE-A1-102006 004 996
- US-A- 5 113 244
- US-A- 5 271 079
- US-A1- 2006 268 545
- US-B1- 6 270 244

## Beschreibung

Die Erfindung betrifft allgemein Beleuchtungen für Fahrzeuge, insbesondere Beleuchtungseinrichtungen mit Halleiter-Leuchtelementen.

Als Leuchtelemente für Beleuchtungszwecke werden in zunehmendem Maße Leuchtdioden eingesetzt. Der Schwerpunkt liegt hier auf der Erzeugung von weissem Licht. Um weisses Licht mit Leuchtdioden zu erzeugen, werden im Allgemeinen Weisslicht-LEDs verwendet, die eine blau leuchtende LED umfassen, deren Licht durch Fluoreszenzfarbstoffe teilweise konvertiert wird, so daß ein breitbandiges Spektrum erhalten wird. Allerdings erscheint dieses Licht verglichen mit dem von Glühbirnen aufgrund des hohen Blau-Anteils relativ kalt. Zudem kann es durch Veränderung des Farbstoffes nach einiger Zeit zu Verschiebungen des Farborts kommen.

Bei Beleuchtungen mit Leuchtdioden ergeben sich außerdem auch vielfach Probleme mit der Gleichmäßigkeit der Beleuchtung. Ungleichmäßigkeiten resultieren dabei unter anderem dadurch, daß mehrere LEDs eingesetzt werden, die von vorneherein oder im Laufe der Zeit unterschiedliche Helligkeiten oder Farben aufweisen. Ebenfalls können sich Probleme ergeben, wenn komplexere leuchtende Formen, wie etwa speziell gestaltete beleuchtete Bedienelemente, z.B. Schalter vorgesehen sein sollen. Hier können sich entlang der beleuchteten Fläche unterschiedliche Helligkeiten ergeben.

Die EP 1 091 166 A1 zeigt ein Lichtkupplungs- und Verteilsystem, das sich für den Einsatz in einem Fahrzeug eignet. Eine Lichtquelle unter Einbezug einer Mehrzahl von Lichtemittern ist nahe einer schmal-rechteckförmigen Lichteintrittsfläche eines Lichtkopplers angeordnet, dessen Lichtaustrittsseite sich zu einer optischen Faser hin verjüngt. Die optische Faser führt zu einer Lichtabgabestelle hin, um jeweils eine der Beleuchtungsstellen eines Fahrzeugs zu besorgen.

Aus der US 6,270,244 B1 ist ein faseroptisches Beleuchtungssystem bekannt, bei dem eine Lichtbogenlampe oder Anordnungen von Festkörperleuchtelementen sternförmig angeordnete Lichtsammler mit Licht beaufschlagen, wobei die Lichtsammler einen Kondensorabschnitt und einen Homogenisierungsabschnitt aufweisen, zu dem hin sich der jeweilige Lichtsammler verjüngt. An den Homogenisierungsabschnitt schließt sich eine jeweilige optische Faser an, die zu einer jeweiligen Lichtabgabestelle führen kann.

Aus der DE 10 2006 004996 A1 ist ein Lichtmischer für LEDs bekannt, der eine keulenförmige Gestalt mit einem breiten Lichteintrittsende und einem schmalen Lichtaustrittsende aufweist, sich also vom Lichteintrittsende zum Lichtaustrittsende hin verjüngt.

US 2006/0268545 A1 zeigt ein lichtemittierendes Paneel, an dessen sich gegenüberliegenden Schmalseiten dachförmige Fortsätze vorhanden sind, an deren Spitze jeweilige Lichtquellen ankoppeln. Jeweils eine Breitseite des lichtemittierenden Paneels ist als Lichtabgabebereich ausgebildet.

Aus US 5,271,079 ist eine Lichtmischeinrichtung mit Vielfach-Lichtquellen bekannt, die Licht einem Mischstab zuführen, der das Licht mischt und es so einer Mehrzahl von optischen Fasern zuführt. Vielfach-LEDs, die in verschiedenen unterschiedlichen Bereichen Licht erzeugen, sind auf einem Träger aus Messing oder einem anderen geeigneten Material angeordnet und ihre Lichtaustrittsseite ist über optischen Kleber mit der Lichteintrittsfläche des Mischstabes verbunden. Der Mischstab selbst ist aus einem Kern höheren Brechungsindex und einem Mantel niedrigeren Brechungsindex aufgebaut und sitzt in einer Stufenbohrung eines Gehäuses, in welchem auch die Enden von fortführenden optischen Fasern befestigt sind.

Der Erfindung liegt daher die Aufgabe zugrunde, eine hinsichtlich der oben genannten Anforderungen und Probleme verbesserte Beleuchtungseinrichtung, insbesondere für Fahrzeuge zu schaffen. Diese Aufgabe wird durch den Gegenstand der unabhängigen Ansprüche gelöst. Vorteilhafte Ausgestaltungen und Weiterbildungen der Erfindung sind in den jeweiligen abhängigen Ansprüchen angegeben.

Dementsprechend ist erfindungsgemäß eine Beleuchtungseinrichtung gemäß Anspruch 1 vorgesehen, welche zumindest zwei Halbleiter-Lichtquellen umfasst, welche Licht mit unterschiedlichen Farben abstrahlen. Die Beleuchtungseinrichtung umfasst wenigstens einen Lichtleiter, in welchen das Licht der Halbleiter-Lichtquellen eingekoppelt wird, und eine eintrittsseitig zum Lichtleiter angeordnete Lichtmischer-Einrichtung mit einem transparenten, lichtbrechenden Element, mit welcher die räumliche Verteilung des Lichts der Lichtquellen vermischt wird, so daß Licht erzeugt wird, welches eine farbliche Überlagerung des Lichts der Halbleiter-Lichtquellen darstellt. Das transparente, lichtbrechende Element weist eine Stirnfläche auf, die eine Lichteintrittsfläche bildet, wobei die Halbleiter-Lichtquellen nebeneinander und in Gegenüberstellung zur Lichteintrittsfläche angeordnet sind.

Die Farben der Halbleiter-Lichtquellen können dabei insbesondere unter Totalreflexion zumindest von Teilen des in das lichtleitende Element hineingeleiteten Lichts an dessen Wandung vermischt werden. Hierzu ist beispielsweise ein transparenter, lichtleitender Stab geeignet. Allgemein ist es für ein solches lichtleitendes Element bevorzugt, dieses als Kern-Mantel-Element mit einem lichtleitenden Kern und einem Mantel mit gegenüber dem Kern geringeren Brechungsindex auszuführen, so daß Totalreflexion an der Kern-Mantel-Grenzfläche erfolgt. Es sind aber auch mantellose Elemente möglich, wobei die Totalreflexion dann an dessen Oberfläche erfolgt.

Mit einem solchen transparenten lichtbrechenden Element kann in einfacher Weise eine effektive Mischung des Lichts derart bewirkt werden, daß am Ende der Lichtmischer-Einrichtung in einer Ebene senkrecht zur Lichtausbreitungsrichtung betrachtet eine nahezu ortsunabhängige Farbe und Intensität erhalten wird.

Um eine hohe Effizienz bezüglich des in das lichtbrechende Element einkoppelbaren Lichts zu erreichen, ist es weiterhin günstig, wenn der lichtleitende Stab eine an den Lichtleiter gekoppelte Lichtaustrittsfläche aufweist, welche die Eintrittsfläche in Aufsicht betrachtet vollständig überdeckt. Dies ist im einfachsten Fall mittels eines allgemein prismatischen Stabs möglich, wobei als prismatisch hier ein Körper verstanden wird, dessen Form sich durch Parallelverschiebung einer Fläche ergibt. Im Falle einer Kreisfläche ergibt sich so ein Zylinder.

Gemäß einer weiteren Ausführungsform der Erfindung kann der transparente Stab auch zumindest entlang eines Abschnitts konisch geformt sein, wobei die Lichteintrittsfläche kleiner als die Lichtaustrittsfläche ist. In diesem Fall erweitert sich die Querschnittsfläche des Stabs also in Lichtausbreitungsrichtung. Dies ist günstig, um einen besonders großen Winkelbereich des von den Halbleiter-Lichtquellen emittierten Lichts zu erfassen und zum Lichtleiter zu leiten.

In allen Fällen unabhängig von der Form des Stabes ist es günstig, wenn der Stab, insbesondere hier dessen Lichtaustrittsfläche eine an die Lichteintrittsfläche des Lichtleiters angepasste Form aufweist, um Verluste beim Einkoppeln in den Lichtleiter zu minimieren. Dementsprechend sollte die Lichtaustrittsfläche des Stabs sowohl in der Größe, als auch in der Form der Lichteintrittsfläche des Lichtleiters entsprechen.

Das lichtbrechende Element der Lichtmischer-Einrichtung kann für eine besonders effektive Farbmischung gemäß einer Weiterbildung der Erfindung auch wenigstens abschnittsweise einen in Lichtausbreitungsrichtung gesehenen Querschnitt mit rechtwinklig zueinander angeordneten geradlinigen Kanten aufweisen. Die rechtwinkligen Kanten bewirken eine Rückreflexion mit antiparaller Ausbreitungskomponente senkrecht zur optischen Achse. Das Licht mischt sich dann so, wie es bei sich frei ausbreitenden Strahlen der Fall wäre, wobei die Strahlen aber durch Totalreflexion an den Wandungen des lichtbrechenden Stabs innerhalb des Stabs geführt werden.

Die Lichteintrittsfläche des transparenten, lichtleitenden Elements ist besonders bevorzugt plan ausgeführt, oder allenfalls so gewölbt, daß dessen Brechkaft 1 Dioptrie betragsmäßig nicht übersteigt. Dies ist unter anderem günstig, um die Halbleiter-Lichtquellen sehr dicht an der Eintrittsfläche anordnen zu können. Allgemein ist dazu in Weiterbildung der Erfindung vorgesehen, daß der Abstand der Lichtaustrittsflächen der Halbleiter-Leuchtelemente zur Lichteintrittsfläche des transparenten, lichtbrechenden Elements höchstens 1/5 der längsten Seitenabmessung der Lichteintrittsfläche des transparenten, lichtbrechenden Elements beträgt. Bei einer runden Lichteintrittsfläche beträgt bei dieser Ausführungsform der Erfindung also der Abstand höchstens 1/5 des Durchmessers, oder bei einer quadratischen Lichteintrittsfläche höchstens 1/5 der Länge der Diagonalen.

Überraschend kann das transparente, lichtbrechende Element für eine effektive Lichtmischung vergleichsweise kurz gehalten werden. So kann das Element, wie etwa ein lichtmischender Abschnitt eines Einzel-Lichtleiters oder insbesondere ein lichtleitender Stab einen Brechungsindex, eine Länge und eine Form aufweisen, die so bemessen sind, daß die durchschnittliche Anzahl der Reflexionen aller durch das Element geleiteten und wieder aus dem Element austretenden Strahlen kleiner als 1,2, oder sogar insbesondere kleiner eins ist. Für die nicht reflektierten Strahlen wird so eine Lichtmischung ähnlich dem Mechanismus der Lichtmischung bei freien Strahlen erreicht, der sehr effektiv ist.

Durch die Lichtbrechung an der Lichteintrittsfläche werden die emittierten Strahlen in Richtung auf die optische Achse gelenkt, so daß sich der Anteil der nicht an der Wandung reflektierten Lichtstrahlen erhöht. Derartige Geometrien können beispielsweise realisiert werden, indem das transparente lichtbrechende Element eine Länge in Lichtausbreitungsrichtung aufweist, welche höchstens das achtfache der kleinsten Abmessung der Lichteintrittsfläche bei seitlicher Betrachtung beträgt. Bei einer runden Lichteintrittsfläche ist die kleinste seitliche Abmessung der Durchmesser. Bei quadratischen Eintrittsflächen ist die kleinste seitliche Abmessung durch die Kantenlänge gegeben. Bei einer rechteckigen Eintrittsfläche entsprechend die kürzere Kantenlänge des Rechtecks.

Weiterhin ist es für die Effizienz der Anordnung günstig, wenn die numerische Apertur des transparenten, lichtbrechenden Elements mindestens so groß wie die des Lichtleiters, oder auch größer ist. Damit wird sichergestellt, daß der maximal mögliche Winkelbereich des emittierten Lichts von der Lichtmischer-Einrichtung aufgefangen und an den Lichtleiter weitergeleitet wird. Aus diesem Grund ist es auch von Vorteil, wenn die Fläche der Einhüllenden der Leuchtflächen der Halbleiter-Lichtquellen in Aufsicht betrachtet kleiner ist, als die Eintrittsfläche des lichtbrechenden, transparenten Elements. Insbesondere sollte dazu auch die Lichteintrittsfläche des lichtbrechenden, transparenten Elements in Aufsicht betrachtet die Fläche der Einhüllenden der Leuchtflächen der Halbleiter-Lichtquellen vollständig überdecken. Mit dieser Anordnung wird erreicht, daß schräg nach außen von den Lichtquellen emittierte Lichtstrahlen noch auf die Lichteintrittsfläche treffen und an dessen Wandung zurückreflektiert und so in den Lichtleiter geleitet werden können.

Es gibt weiterhin verschiedene Möglichkeiten, um das im Lichtleiter geführte Licht wieder auszukoppeln. Gemäß einer Ausführungsform der Erfindung kann dazu der Lichtleiter eine seitlich emittierende Faser umfassen. Ein derartiger Lichtleiter weist dazu vorzugsweise lichtstreuende Strukturen an der Grenzfläche zwischen Kern und Mantel auf. Mit einem derartigen Lichtleiter wird eine geringe Absorption bei gleichzeitig definierter seitlicher Auskopplung des Lichts auf. Ebenso möglich ist aber auch eine endseitige Auskopplung an der Stirnfläche.

Die Erfindung ist insbesondere geeignet in Verbindung mit Faserbündeln als Lichtleiter. Hier bietet sich eine separate Lichtmischereinrichtung in Form eines Stabes an. Am Austrittsende des Stabes liegt das Licht der Halbleiter-Lichtquellen mit gleichmäßiger räumlicher Verteilung und Farbe vor, so daß in die einzelnen Fasern Licht von im wesentlichen gleicher Intensität und Farbe eingekoppelt wird.

Dies ermöglicht es nun, das Faserbündel in mehrere räumlich separierte Enden aufzuteilen und damit mehrere einzelne Lichtquellen zu schaffen, die für den Betrachter alle die gleiche Farbe haben. Eines oder mehrere der Enden können auch optische Steckverbinder oder Anschlußeinrichtungen aufweisen, mit denen dann beispielsweise weitere Lichtleiter, die mit der für den Benutzer sichtbaren Lichtaustrittsfläche verbunden sind, angekoppelt werden können.

Mit einer solchen Beleuchtungsanordnung können dann unter anderem die separierten Lichtquellen verschiedene Anzeigen einer Armaturenanordnung eines Fahrzeugs beleuchten.

In Weiterbildung der Erfindung kann dann auch eine Einstell- oder Regeleinrichtung zur Veränderung der Leuchtintensität von zumindest zwei der Halbleiter-Lichtquellen vorgesehen werden, um die Farbe des emittierten Lichts zu verändern. Auf diese Weise kann beispielsweise die Farbe und Helligkeit und damit das Erscheinungsbild eines Armaturenbretts oder eines Fahrzeugführerstands verändert werden. Eine solche Anpassung kann manuell mittels einer vom Fahrer betätigbaren Einstelleinrichtung erfolgen, so daß der Fahrer das Erscheinungsbild des Armaturenbretts oder Führerstands nach seinem persönlichen Geschmack wählen kann. Auch kann eine farbliche Voreinstellung vorgenommen werden, die an die Innenausstattung angepasst ist.

Gegenüber herkömmlichen LED-Leuchten bietet eine erfindungsgemäße Beleuchtungsanordnung den Vorteil, daß sich mit der oder den Lichtaustrittsflächen des einen oder vorzugsweise der mehreren Lichtleiter komplexere leuchtende Formen realisieren lassen, wobei gleichzeitig eine hohe Effizienz und Helligkeit erzielt wird. Unter anderem kann die sichtbare Lichtaustrittsfläche des Lichtleiters eine nicht radialsymmetrische Form aufweisen. So können neben punktförmigen auch insbesondere linienförmige, wie etwa rahmenförmige Lichtaustrittsflächen realisiert werden.

Um komplex geformte Leuchtflächen zu bilden, können bei einem Faserbündel als Lichtleiter die Fasern des Faserbündels oder zumindest eines der räumlich separierten Enden des Faserbündels aufgefächert nebeneinander angeordnet sein und eine Lichtaustrittsfläche beleuchten oder bilden.

In der einfachsten Form der Erfindung kann auch ein Abschnitt des Lichtleiters am Lichteintrittsende das transparente lichtbrechende Element bilden, wobei der Lichtleiter dann ein Einzelleiter ist.

In weiterer Ausgestaltung der Erfindung kann in Alternative oder zusätzlich zu einem durch Totalreflexion mischenden Element auch eine Lichtmischer vorgesehen werden, die eine Kondensor-Optik umfasst. Für eine effektive Lichtmischung kann diese Optik jeweils zumindest eine einer Lichtquelle zugeordnete Linse umfassen.

Bevorzugt werden weiterhin als Halbleiter-Lichtquellen verschiedenfarbige Leuchtdioden eingesetzt. Die Farbe muß dabei nicht notwendigerweise die direkt von der Leuchtdiode emittierte Farbe sein, vielmehr ist auch denkbar, die Farbe einer oder mehrerer LEDs zu konvertieren. Gedacht ist hier unter anderem auch an Weisslicht-LEDs, die an sich eine blaue LED enthalten, deren Licht durch Fluoreszenzfarbstoffe in ein weiss erscheinendes Spektrum umgewandelt wird. Hier können ergänzend eine oder mehrere weitere LEDs ergänzt werden, um gezielt spektrale Bereiche im vermischten Licht zu verstärken und so die Farbtemperatur des Lichts zu verändern. Wird nur weisses Licht in verschiedenen, beispielsweise auch anpassbaren Tönungen gewünscht, reichen unter Umständen auch deutlich schwächere LEDs als Ergänzung zur Weisslicht-LED.

Eine bevorzugte Beleuchtungsanordnung umfasst aber insbesondere eine Anordnung mit zwei grünen, einer blauen und einer roten Leuchtdiode. Eine derartige Mehrfach-LED ist besonders geeignet, um beliebige Farben, einschließlich von Weisstönen mit einstellbarer Farbtemperatur zu erzeugen.

Für den oder die Lichtleiter wird insbesondere Glas als Material bevorzugt. Gleiches gilt auch für das oder die lichtbrechenden Elemente des Lichtmischers. Glas ist gegenüber von Kunststoffen alterungs- und temperaturbeständiger. Diese Eigenschaften machen optische Glaselemente besonders auch für den Einsatz in Fahrzeugen aller Art geeignet, da gerade hier unter anderem starke Temperaturdifferenzen auftreten und Langlebigkeit gefordert wird.

Die Temperaturbeständigkeit von Glas erlaubt es auch, daß der Glas-Lichtleiter in ein Kunststoff-Formteil, vorzugsweise ein spritzgegossenes Kunststoff-Formteil eingebettet werden kann. Kunststoff-Lichtleiter würden demgegenüber bei den beim Spritzgiessen auftretenden Temperaturen schmelzen. Durch das Einbetten des oder der Lichtleiter in Kunststoff-Formteilen können die Möglichkeiten zur Formgebung von Leuchtelementen nochmals deutlich erweitert werden.

Unter anderem ist daran gedacht, Bedienelemente, wie Schalter oder Wählhebel mit einer erfindungsgemäßen Beleuchtungseinrichtung zu beleuchten. Insbesondere auch Anzeigen, Hebel und Schalter eines Armaturenbretter oder Cockpits eines Kraftfahrzeugs können mit einer solchen Beleuchtungseinrichtung ausgestattet werden. Auch ist eine Innenraumbeleuchtung eines Fahrzeugs mit einer erfindungsgemäßen Beleuchtungseinrichtung möglich.

Die Erfindung wird nachfolgend anhand von Ausführungsbeispielen und unter Bezugnahme auf die beigeschlossenen Zeichnungen näher erläutert. Dabei bezeichnen gleiche Bezugszeichen in den Figuren gleiche oder ähnliche Teile.

Es zeigen:
- Fig. 1: eine schematische Querschnittansicht einer Leuchteinheit einer Beleuchtungseinrichtung,
- Fig. 2: eine Aufsicht auf die Lichteintrittsfläche des transparenten, lichtbrechenden Stabs der in Fig. 1 dargestellten Leuchteinheit,
- Fig. 3: eine Variante der in Fig. 1 dargestellten Ausführungsform mit einer Kondensor-Anordnung zur Lichtmischung,
- Fig. 4: eine schematische Darstellung einer Cockpit-Beleuchtung eines Kraftfahrzeugs mit einer erfindungsgemäßen Beleuchtungseinrichtung, und
- Fig. 5: eine weitere Variante der in Fig. 1 gezeigten Leuchteinheit.

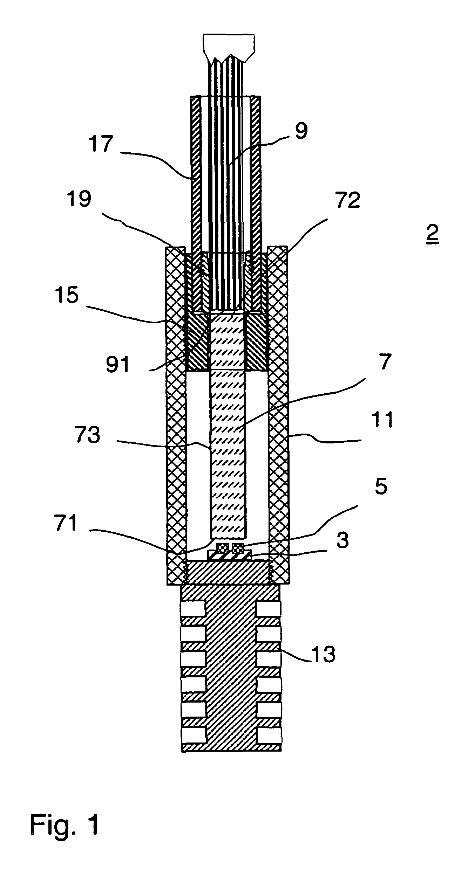

Fig. 1 zeigt eine als Ganzes mit dem Bezugszeichen 2 bezeichnete Leuchteinheit einer erfindungsgemäßen Beleuchtungseinrichtung. Die Leuchteinheit 2 umfasst einen Träger 3 mit mehreren Leuchtdioden 5, welche in einer Kappe 11 gehaltert sind. Dazu ist der Träger 3 bei dem in Fig. 1 gezeigten Beispiel auf einem Kühlkörper 13 montiert, welcher in die Kappe 11 eingeschraubt ist. Außerdem ist in die Kappe 11 eine Fassung 15 eingeschraubt, in welcher eine Endhülse 17 befestigt ist. Die Endhülse 17 haltert einen Lichtleiter 9 in Form eines Faserbündels. Der Lichleiter 9 ist mittels einer in der Endhülse angeordneten Reduzierhülse 19 zentriert. In der Fassung 15 ist außerdem ein transparenter, lichtbrechender Stab 7 mit Stirnflächen 71, 72 so angeordnet, daß die Stirnfläche 71 in Gegenüberstellung zu den Leuchtdioden 5 und die andere Stirnfläche 72 in Gegenüberstellung zur Stirnfläche 91 des Faserbündels 9 stehen.

Die Stirnfläche 71 dient demgemäß als Lichteintrittsfläche und die Stirnfläche 72 als Lichtaustrittsfläche des Stabs 7. Der Abstand der Stirnfläche 72 zum Faserbündel 9 wird ebenso wie der Abstand der Stirnfläche 71 zu den Leuchtdioden 5 allgemein, ohne Beschränkung auf das dargestellte Beispiel möglichst gering gehalten, um eine möglichst effektive Einkopplung des Lichts in den Stab 7 und vom Stab 7 in den Lichtleiter 9 zu erhalten. Die Stirnfläche 72 des Stabs 7 ist zur Optimierung der Einkopplung des Lichts in Form und Größe an die Lichteintrittsfläche 91 des Faserbündels 9 angepasst.

Die Leuchtdioden 5 weisen unterschiedliche Farben auf. Vorzugsweise wird eine Anordnung von 4 Leuchtdioden eingesetzt, wobei sich insbesondere eine Kombination einer rot leuchtenden und einer blau leuchtenden mit zwei grün leuchtenden Leuchtdioden eignet, um durch die additive Farbmischung dieser Dioden weisses Licht zu erhalten. Um das Licht später mittels des Lichtleiters auf mehrere für den Betrachter sichtbare, separierte Lichtquellen zu verteilen, die alle den gleichen Farbeindruck aufweisen, wird das Licht erfindungsgemäß so vermischt, daß über die Eintrittsfläche 91 des Lichtleiters hinweg eine im wesentlichen gleichmäßige Intensitätsverteilung aller Dioden 5 vorliegt. Dies wird in besonders einfacher Weise durch die Lichtmischer-Einrichtung mit dem Stab 7 erreicht.

Ein Teil des Lichts wird an der Wandung 73 reflektiert, während ein weiterer Teil des Lichts ohne Reflexion zur Lichtaustrittsfläche, beziehungsweise Stirnfläche 72 des Stabs gelangt. Da das Licht bei der dargestellten Anordnung aufgrund der Lichtbrechung an der ebenen Stirnfläche 72 zur optischen Achse hin gebrochen wird, ist der Anteil der nicht reflektierten Strahlung sogar vergleichsweise hoch, wenn ein kurzer Stab gewählt wird.

Auch die nicht reflektierten Strahlen der einzelnen Leuchtdioden mischen sich sehr gut, da die Intensität dieser Strahlen am Lichteintrittsende 91 des Lichtleiters für diese Strahlen im wesentlichen nur durch den Intensitätsabfall beeinflusst wird, welcher aus der unterschiedlichen Entfernung der Dioden zu einem jeweiligen Punkt auf der Lichteintrittsfläche 91 bestimmt wird. Sofern eine gewisse Mindestlänge des Stabs 9 im Verhältnis zum Abstand der Leuchtdioden 5 eingehalten wird, kann dieser Intensitätsunterschied vernachlässigt werden. Bevorzugt wird dabei allgemein, ohne Beschränkung auf das dargestellte Beispiel, daß die Länge des lichtbrechenden transparenten Elements der Lichtmischer-Einrichtung zumindest einen Faktor 3 länger ist, als der maximale Mittenabstand der einzelnen eingesetzten Halbleiter-Lichtelemente.

Jedenfalls kann, wie auch bei dem in Fig. 1 dargestellten Beispiel ein vergleichsweise kurzer Stab 7 verwendet werden, dessen Länge in Lichtausbreitungsrichtung höchstens das achtfache der kleinsten seitlichen Abmessung der Lichteintrittsfläche beträgt. Bei dem in Fig. 1 gezeigten Beispiel ist der Stab 7 nur etwa um einen Faktor 5 länger als der Durchmesser der Eintrittsfläche 71.

Der Brechungsindex, die Länge und Form des Stabs 7 können allgemein so bemessen sein, daß die durchschnittliche Anzahl der Reflexionen aller durch das Element geleiteten und wieder aus dem Element austretenden Strahlen kleiner als eins ist. Würde man den Stab 7 ganz weglassen, bekäme man also an sich auch eine gute Durchmischung der Farben. Allerdings würde sich in diesem Fall die Effizienz drastisch verringern. Die numerische Apertur des Stabs 7 wird weiterhin vorzugsweise so gewählt, daß sie mindestens so hoch ist, wie die numerische Apertur der einzelnen Fasern des Lichtleiters 9. Um möglichst viel Licht in den Stab 7 einzukoppeln, beträgt der Abstand der lichtemittierenden Oberseiten der LEDs 5 zur Lichteintrittsfläche höchstens 1/5 der Seitenabmessung der Lichteintrittsfläche, also bei einem zylindrischen Stab höchstens 1/5 des Durchmessers.

Der Stab 7 hat weiterhin bei dem in Fig. 1 gezeigten Beispiel eine zylindrische Form. Alternativ kann der Stab auch eine prismatische Form mit quadratischen oder rechteckigen, oder auch allgemein polygonalen Stirnflächen aufweisen.

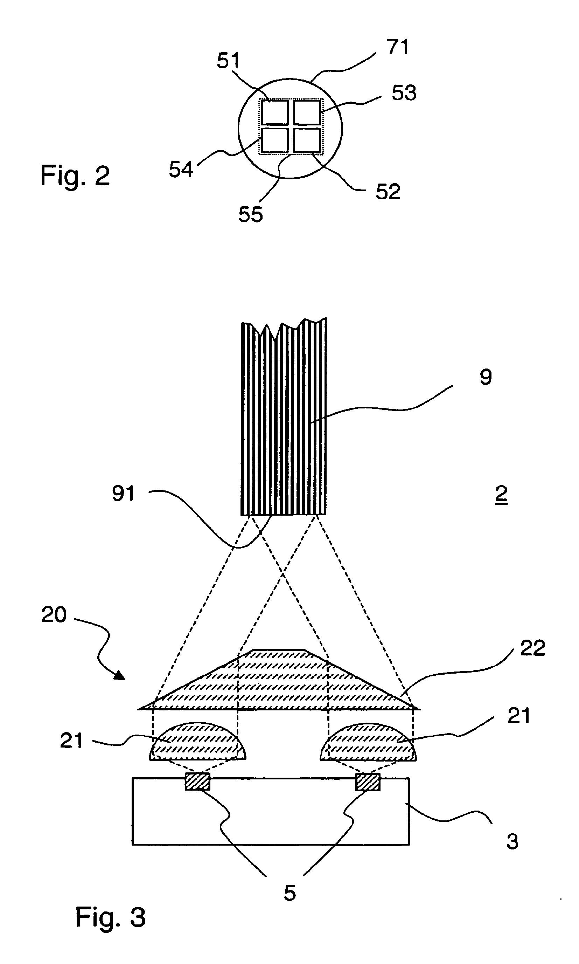

Fig. 2 zeigt dazu eine Aufsicht auf die Lichteintrittsfläche 71 des Stabs 7 der in Fig. 1 dargestellten Leuchteinheit 2, betrachtet in axialer Richtung, beziehungsweise entlang der optischen Achse des Stabs 7. Bei dem in Fig. 2 gezeigten Beispiel hat der Stab eine kreisförmige Querschnittfläche. Entsprechend ist der Stab hier zylinderförmig. Zur Beleuchtung sind vier Leuchtdioden 51, 52, 53, 54 vorgesehen, die in einer matrixförmigen 2x2-Konfiguration in Lichtausbreitungsrichtung gesehen unterhalb der Lichteintrittsfläche 71 angeordnet sind.

Wie anhand von Fig. 2 zu erkennen ist, ist die Fläche der gedachten Umrandung der äußeren Kanten der einzelnen Leuchtflächen, beziehungsweise die Fläche der Einhüllenden 55 in Aufsicht betrachtet kleiner als die Eintrittsfläche 71. Dies gilt nicht nur für das Flächenmaß, sondern insbesondere auch für die Seitenabmessungen der Lichteintrittsfläche 71 und der Einhüllenden 55. So sind die Diagonalen der Einhüllenden 55 kürzer als der Durchmesser der Lichteintrittsfläche 71.

Auch sind die Leuchtdioden 51, 52, 53, 54 so angeordnet, daß die Lichteintrittsfläche 71 die Fläche der Einhüllenden der Leuchtflächen der Halbleiter-Lichtquellen in Aufsicht entlang der optischen Achse betrachtet vollständig überdeckt.

Fig. 3 zeigt schematisch eine Variante des in Fig. 1 gezeigten Beispiels. Anstelle eines lichtbrechenden, totalreflektierenden Stabs 7 ist in diesem Beispiel eine Kondensor-Optik 20 vorgesehen. Das Licht der Leuchtdioden 5 wird hier durch jeweils über den Leuchtdioden 5 angeordneten Kondensor-Linsen 21 fokussiert und parallel abgebildet.

Ein Prisma 22 ist vorgesehen, mit welchem die erzeugten Parallelstrahl-Bündel abgelenkt werden und auf der eintrittsseitigen Stirnfläche 91 des Lichtleiters überlagert werden. Mit einer solchen Anordnung kann besonders bei kleinflächigen, beziehungsweise nahezu punktförmigen Leuchtdioden eine sehr gute Farbmischung erzielt werden, da für kleine Lichtquellen gut definierte Parallelstrahl-Bündel erzeugt werden können. Demgegenüber ist ein durch Totalreflexion mischender Stab, wie ihn Fig. 1 zeigt, auch für großflächigere LEDs geeignet.

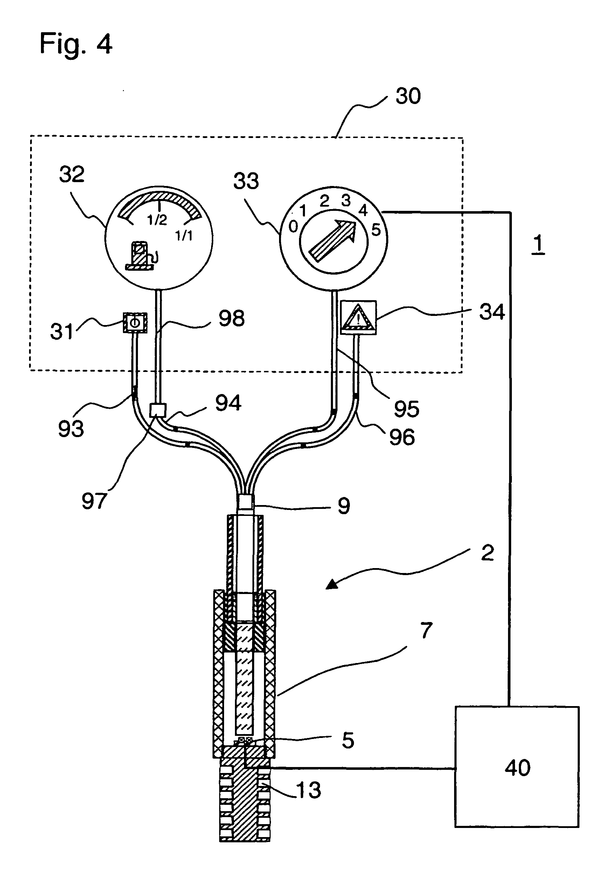

Fig. 4 zeigt ein Ausführungsbeispiel einer Beleuchtungseinrichtung 1 für ein schematisch durch die gestrichelte Umrandung symbolisiertes Cockpit 30. Das Cockpit 30 umfasst verschiedene beleuchtete Anzeige- und Bedienelemente. Bei dem in Fig. 4 gezeigten Beispiel umfasst das Cockpit im Speziellen einen Ausschalter 31 für eine Armatur, eine Tank-Füllstandanzeige 32, einen Wählhebel 33 und einen Schalter 34 zur Betätigung der Warnblinkanzeige. Beispielhafte beleuchtete Flächen sind jeweils schraffiert dargestellt.

Das Faserbündel des Lichtleiters 9 ist in mehrere räumlich separierte Enden 93, 94, 95, 96 aufgeteilt. Jeweils eines der Enden 93, 94, 95, 96 ist mit einer der Bedien- und Anzeigeelemente 31, 32, 33, 34 verbunden und leitet das Licht der Leuchtdioden 5 zu den jeweiligen Lichtaustrittsflächen. Diese können beispielsweise als transparente Kunststoff-Formteile ausgebildet sein, in welche die Faserenden eingebettet sind. Um komplexere Geometrien von Leuchtflächen zu realisieren, können gemäß einer Ausführungsform der Erfindung die Enden des Lichtleiters aufgefächert sein, wobei die einzelnen Faserenden der Geormetrie der Leuchtfläche folgend nebeneinander angeordnet werden. So weist bei dem in Fig. 4 gezeigten Ausführungsbeispiel keine der schraffiert dargestellten Leuchtflächen der Anzeige- und Bedienelemente eine einfache radialsymmetrische Form auf. Die beiden Schalter 31 und 34 weisen beispielsweise rahmenförmige, beziehungsweise umlaufend linienförmige Leuchtflächen in nicht radialsymmetrischer Form auf. Solche Leuchtflächen sind durch einzelne Lichtquellen nur schwer homogen zu beleuchten.

Hinzu kommt, daß durch die zentrale Beleuchtung mittels der Leuchteinheit und der Lichtmischer-Einrichtung alle Leuchtflächen der Anzeige- und Bedienelemente 31, 32, 33, 34 eine exakt gleiche Farbe, sowie gleichbleibende relative Helligkeiten aufweisen. Die Helligkeit und/oder Farbe der Leuchtflächen kann außerdem auch individuell angepasst werden.

Bei dem gezeigten Beispiel ist dazu eine Einstelleinrichtung 40 vorgesehen, mit welcher die Stromversorgung der LEDs 5 eingestellt und/oder geregelt wird. Der Wählhebel 33 dient hier beispielhaft zur Einstellung der Einstelleinrichtung 40, so daß mit dem Wählhebel 33 die Farbe und/oder Helligkeit aller Leuchtflächen gleichmäßig verstellt werden kann. Um die Farbe zu verändern, wird dementsprechend mittels der Einstelleinrichtung 40 die Leuchtintensität von zumindest zwei der LEDs 5 relativ zueinander verändert.

Die einzelnen Enden des Lichtleiters 9 müssen nicht direkt in den Leuchtflächen münden. Vielmehr kann es auch, beispielsweise für eine leichtere Verdrahtung zweckmäßig sein, den Lichtleiter 9 oder zumindest eines der separierten Enden mit einer optischen Anschlußeinrichtung versehen ist, um ein weiteres optisches Element, insbesondere auch einen weiteren Lichtleiter anzukoppeln. Bei dem in Fig. 4 gezeigten Beispiel ist das Ende 94 des Lichtleiters 9 mit einem optischen Steckverbinder 97 ausgestattet. Mit dem Steckverbinder 97 ist ein weiterer Lichtleiter 98 angeschlossen, der schließlich mit der Leuchtfläche der Tank-Fülllstandanzeige 32 verbunden ist.

Mit einer wie vorstehend beschriebenen Anordnung kann auch in entsprechender Weise eine Fahrzeug-Innenbeleuchtung realisiert werden. Diesbezüglich ist unter anderem auch an Signalbeleuchtungen gedacht, wie etwa an Markierungs-Leuchtstreifen in Flugzeugen

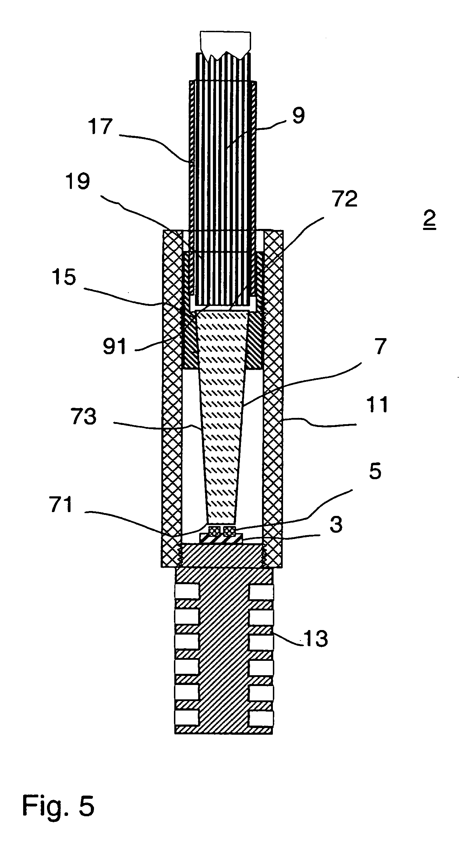

Fig. 5 zeigt eine weitere Variante der in Fig. 1 gezeigten Leuchteinheit 2. Bei dieser Variante wird anstelle eines allgemein prismatischen, insbesondere zylindrischen Stabs 7 ein konischer Stab 7 verwendet. Dabei wird der Stab 7 so eingesetzt, daß die Lichteintrittsfläche 71 kleiner als die Lichtaustrittsfläche ist. Die an den Lichtleiter gekoppelte Lichtaustrittsfläche 72 überdeckt die Eintrittsfläche 71 dabei in Aufsicht betrachtet vollständig.

Diese Form ist günstig, da ein noch größerer Raumwinkel des von den Leuchtdioden 5 emittierten Lichts zur Lichtaustrittsfläche geleitet wird. Durch die sich entlang der optischen Achse in Lichtausbreitungsrichtung erweiternde Form erhöht sich die numerische Apertur, da der Auftreffwinkel der Lichtstrahlen auf die Wandung 73 vergrößert wird und sich so auch der Anteil der auf die Wandung auftreffenden, aber nicht totalreflektierten Strahlen verringert.

Es ist dem Fachmann ersichtlich, daß die Erfindung nicht auf die vorstehend beschriebenen Ausführungsbeispiele beschränkt ist. Vielmehr können die Ausführungsbeispiele vielfältig variiert und deren einzelne Merkmale miteinander kombiniert werden.

## Patentansprüche

1. Beleuchtungseinrichtung zur Schaffung einer Mehrzahl von einzelnen Lichtabgabestellen, insbesondere für Fahrzeuge, enthaltend:
- mindestens zwei Halbleiter-Lichtquellen (5) mit einer Lichtemissionsfläche zur Emission von Licht unterschiedlicher Farbe, die nach Mischung einen bestimmten Farbton, insbesondere weißes Licht, ergeben,
- einen Träger (3) für die Halbleiter-Lichtquellen (5),
- einen Stab (7) aus transparentem, lichtbrechendem Material als Lichtmischer-Einrichtung mit einer Lichteintrittsfläche (71), einer Lichtaustrittsfläche (72) und einer Umhüllungsfläche, welche die Lichteintrittsfläche mit der Lichtaustrittsfläche verbindet, wobei die Lichteintrittsfläche (71) des Stabes (7) größer als die Summe der Lichtemissionsflächen der mindestens beiden Halbleiter-Lichtquellen (5) ist und wobei die Lichteintrittsfläche (71) des Stabes (7) gleich oder kleiner als die Lichtaustrittsfläche (72) des Stabes (7) ist,
- ein Faserbündel (9) mit einer Mehrzahl von optischen Fasern, die jeweils eine Lichteintrittsfläche (91) nahe der Lichtaustrittsfläche (72) des Stabes (7) zur Aufnahme des von dem Stab abgegebenen Lichts und jeweils eine Lichtaustrittsfläche aufweisen und die zur Schaffung von örtlich verteilt angeordneten Lichtabgabestellen (31, 32, 33, 34) in mehrere räumlich separierte Enden (93, 94, 95, 96) aufgeteilt sind; **gekennzeichnet durch**
- Mittel (11, 15, 17), um den Träger (3), den Stab (7) und das Faserbündel (9) zusammenzuhalten und eine Leuchteinheit (2) zu bilden, **dadurch** gekennzeichnet, dass die Zusammenhaltmittel (11, 15, 17) eine Hülse (11) mit einem ersten und zweiten Ende aufweisen, wobei das erste Ende auf einem Kühlkörper (13) montiert ist und das zweite Ende mit einer Fassung (15) verbunden ist, welche einerseits das lichtaustrittsseitige Ende des Stabes (7) so haltert, dass der restliche Stab (7) in einem Freiraum zwischen Hülse (11) und Fassung (15) eintaucht sowie mit Gegenüberstellung in möglichst geringem Abstand der Lichteintrittsfläche (71) zu den Halbleiter-Lichtquellen (5) angeordnet ist, und in welcher Fassung (15) andererseits eine Endhülse (17) befestigt ist, die das Faserbündel (9) in Gegenüberstellung in möglichst geringem Abstand der Faserbündel-Lichteintrittfläche (91) zur Lichtaustrittsfläche (72) des Stabes (7) haltert.

2. Beleuchtungseinrichtung nach Anspruch 1, worin die Zusammenhaltmittel (11, 15, 17) eine Reduzierhülse (19) umfassen, um das Faserbündel (9) zentriert in der Endhülse (17) zu halten.

3. Beleuchtungseinrichtung nach Anspruch 1 oder 2, worin die Fassung (15) zusammen mit der Endhülse (17), dem Faserbündel (9) und dem Stab (7) in der Hülse (11) der Zusammenhaltmittel zu Befestigungszwecken eingeschraubt ist.

4. Beleuchtungseinrichtung nach einem der Ansprüche 1 bis 3, worin der Stab (7) zylindrisch geformt ist.

5. Beleuchtungseinrichtung nach einem der Ansprüche 1 bis 3, worin der Stab (7) konisch geformt ist.

6. Beleuchtungseinrichtung nach einem der Ansprüche 1 bis 3, worin der Stab (7) einen Querschnitt mit zumindest abschnittsweise geraden Kanten im rechten Winkel zueinander aufweist und der Querschnitt konstant ist oder sich vom Lichteintrittsende zum Lichtaustrittsende vergrößert.

7. Beleuchtungseinrichtung nach einem der Ansprüche 1 bis 6, worin die Lichtaustrittsfläche (72) des Stabes (7) an die Lichtaustrittslfäche (91) des Faserbündels (9) angepasst ist und die Lichteintrittsfläche (91) des Faserbündels (9) im Hinblick auf eine Brechkraft gestaltet ist, die eine Dioptrie nicht übersteigt.

8. Beleuchtungseinrichtung nach einem der Ansprüche 1 bis 7,
worin die Halbleiter-Lichtquellen (5) jeweils eine lichtemittierende Fläche (51, 52, 53, 54) aufweisen, wobei die Lichteintrittsfläche (71) des Stabes (7) eine längste Seitenabmessung aufweist und wobei ein Abstand zwischen den lichtemittierenden Flächen (51, 52, 53, 54) der Halbleiter-Lichtquellen (5) und der Lichteintrittsfläche (71) des Stabes (7) existiert und dieser Abstand höchstens ein Fünftel der längsten Seitenabmessung der Lichteintrittsfläche (71) des Stabes (7) beträgt.

9. Beleuchtungseinrichtung nach einem der Ansprüche 1 bis 8,
worin die Lichteintrittsfläche (71) des Stabes (7) eine Seitenabmessung gemäß einem Durchmesser oder einer Kantenlänge aufweist und der Stab (7) eine axiale Länge in Lichtausbreitungsrichtung besitzt, die höchstens das Achtfache der seitlichen Abmessung beträgt.

## Claims

1. Illumination device for providing a plurality of individual light output points, in particular for motor vehicles, containing:
- at least two semiconductor light sources (5) having a light emission surface for emission of light of a different colour which after mixing produces a specific colour shade, in particular white light,
- a carrier (3) for the semiconductor light sources (5),
- a rod (7) consisting of transparent, light-refracting material as a light mixer device having a light entry surface (71), a light exit surface (72) and an envelope surface which connects the light entry surface to the light exit surface, wherein the light entry surface (71) of the rod (7) is larger than the sum of the light emission surfaces of the at least two semiconductor light sources (5) and wherein the light entry surface (71) of the rod (7) is the same size as or smaller than the light exit surface (72) of the rod (7),
- a fibre bundle (9) having a plurality of optical fibres which in each case have a light entry surface (91) in proximity to the light exit surface (72) of the rod (7) for receiving the light output by the rod, and in each case have a light exit surface and which for the purpose of providing light output points (31, 32, 33, 34), which are disposed in a locally distributed manner, are divided into several spatially separated ends (93, 94, 95, 96); **characterised by**
- means (11, 15, 17) for holding together the carrier (3), the rod (7) and the fibre bundle (9) and for forming a luminaire (2), **characterised in that** the holding-together means (11, 15, 17) have a sleeve (11) having a first and second end, wherein the first end is mounted on a heat sink (13) and the second end is connected to a holder (15) which on the one hand holds the light exit-side end of the rod (7) such that the remainder of the rod (7) is received in a free space between the sleeve (11) and holder (15) and is disposed with juxtaposition at the smallest possible spaced interval of the light entry surface (71) with respect to the semiconductor light sources (5), and in which holder (15), on the other hand, an end sleeve (17) is attached which holds the fibre bundle (9) in juxtaposition at the smallest possible spaced interval of the fibre bundle-light entry surface (91) with respect to the light exit surface (72) of the rod (7).

2. Illumination device as claimed in claim 1, wherein the holding-together means (11, 15, 17) comprise a reduction sleeve (19) in order to hold the fibre bundle (9) in a centred manner in the end sleeve (17).

3. Illumination device as claimed in claim 1 or 2, wherein the holder (15) is screwed together with the end sleeve (17), the fibre bundle (9) and the rod (7) in the sleeve (11) of the holding-together means for fastening purposes.

4. Illumination device as claimed in any one of claims 1 to 3, wherein the rod (7) is formed in a cylindrical manner.

5. Illumination device as claimed in any one of claims 1 to 3, wherein the rod (7) is formed in a conical manner.

6. Illumination device as claimed in any one of claims 1 to 3, wherein the rod (7) has a cross-section with edges, of which at least sections are straight, at a right angle with respect to each other and the cross-section is constant or increases in size from the light entry end to the light exit end.

7. Illumination device as claimed in any one of claims 1 to 6, wherein the light exit surface (72) of the rod (7) is adapted to the light exit surface (91) of the fibre bundle (9) and the light entry surface (91) of the fibre bundle (9) is formed with regard to a refractive force which does not exceed one dioptre.

8. Illumination device as claimed in any one of claims 1 to 7, wherein the semiconductor light sources (5) have in each case a light-emitting surface (51, 52, 53, 54), wherein the light entry surface (71) of the rod (7) has a longest lateral dimension and wherein a spaced interval exists between the light-emitting surfaces (51, 52, 53, 54) of the semiconductor light sources (5) and the light entry surface (71) of the rod (7) and this spaced interval amounts at most to one fifth of the longest lateral dimension of the light entry surface (71) of the rod (7).

9. Illumination device as claimed in any one of claims 1 to 8, wherein the light entry surface (71) of the rod (7) has a lateral dimension in accordance with a diameter or an edge length and the rod (7) has an axial length in the direction of light propagation which amounts at most to eight times the lateral dimension.

## Revendications

1. Dispositif d'éclairage pour l'obtention d'une pluralité de points individuels d'émission lumineuse, en particulier pour des véhicules, comprenant :
- au moins deux sources lumineuses semi-conductrices (5) avec une surface d'émission lumineuse pour l'émission de lumière de différentes couleurs permettant d'obtenir une nuance définie après mélange, en particulier de la lumière blanche,
- un support (3) pour les sources lumineuses semi-conductrices (5),
- une barre (7) en matériau transparent réfringent en tant que dispositif de mélange lumineux avec une surface d'entrée de lumière (71), une surface de sortie de lumière (72) et une surface d'enveloppe reliant la surface d'entrée de lumière à la surface de sortie de lumière, la surface d'entrée de lumière (71) de la barre (7) étant supérieure au total des surfaces d'émission lumineuse des au moins deux sources lumineuses semi-conductrices (5), et la surface d'entrée de lumière (71) de la barre (7) étant inférieure ou égale à la surface de sortie de lumière (72) de la barre (7),
- un faisceau de fibres (9) avec une pluralité de fibres optiques comportant chacune une surface d'entrée de lumière (91) à proximité de la surface de sortie de lumière (72) de la barre (7) pour la réception de la lumière émise par la barre, et comportant chacune une surface de sortie de lumière, et divisées en plusieurs extrémités (93, 94, 95, 96) spatialement séparées pour l'obtention de points individuels d'émission lumineuse (31, 32, 33, 34) répartis localement ;
**caractérisé par**
- des moyens (11, 15, 17) pour maintenir ensemble le support (3), la barre (7) et le faisceau de fibres (9), et former une unité lumineuse (2), **caractérisés en ce que** lesdits moyens (11, 15, 17) comportent un tube (11) avec une première et une deuxième extrémités, la première extrémité étant montée sur un corps de refroidissement (13) et la deuxième extrémité étant reliée à une douille (15), laquelle maintient d'un côté l'extrémité de la barre (7) côté sortie lumineuse de telle manière que le reste de la barre (7) plonge dans un espace libre entre tube (11) et douille (15), et est disposé en opposition aux sources lumineuses semi-conductrices (5) avec un espacement aussi réduit que possible de la surface d'entrée de lumière (71) à celles-ci, un tube d'extrémité (17) étant de l'autre côté fixé dans ladite douille (15), lequel maintient le faisceau de fibres (9) en opposition à la surface de sortie de lumière (72) de la barre (7) avec un espacement aussi réduit que possible de la surface d'entrée de lumière (91) du faisceau de fibres à celle-ci.

2. Dispositif d'éclairage selon la revendication 1, où les moyens de maintien (11, 15, 17) comprennent une douille de réduction (19) pour maintenir le faisceau de fibres (9) centré dans le tube d'extrémité (17).

3. Dispositif d'éclairage selon la revendication 1 ou 2, où la douille (15) est vissée avec le tube d'extrémité (17), le faisceau de fibres (9) et la barre (7) dans le tube (11) des moyens de maintien, à des fins de fixation.

4. Dispositif d'éclairage selon l'une des revendications 1 à 3, où la barre (7) est de forme cylindrique.

5. Dispositif d'éclairage selon l'une des revendications 1 à 3, où la barre (7) est de forme conique.

6. Dispositif d'éclairage selon l'une des revendications 1 à 3, où la barre (7) présente une section transversale avec des bords au moins partiellement droits, disposés à angle droit entre eux, et où la section transversale est constante ou s'accroît de l'extrémité d'entrée de lumière à l'extrémité de sortie de lumière.

7. Dispositif d'éclairage selon l'une des revendications 1 à 6, où la surface de sortie de lumière (72) de la barre (7) est ajustée à la surface de sortie de lumière (91) du faisceau de fibres (9), et où la surface d'entrée de lumière (91) du faisceau de fibres (9) est prévue pour une puissance réfringente qui ne dépasse pas une dioptrie.

8. Dispositif d'éclairage selon l'une des revendications 1 à 7, où les sources lumineuses semi-conductrices (5) comportent chacune une surface d'émission lumineuse (51, 52, 53, 54), la surface d'entrée de lumière (71) de la barre (7) présentant une dimension latérale maximale, et un espacement étant présent entre les surfaces d'émission lumineuse (51, 52, 53, 54) des sources lumineuses semi-conductrices (5) et la surface d'entrée de lumière (71) de la barre (7), ledit espacement étant égal au maximum à un cinquième de la dimension latérale maximale de la surface d'entrée de lumière (71) de la barre (7).

9. Dispositif d'éclairage selon l'une des revendications 1 à 8,
où la surface d'entrée de lumière (71) de la barre (7) présente une dimension latérale suivant un diamètre ou une longueur de bord, et où la barre (7) présente une longueur axiale dans la direction de diffusion lumineuse qui est égale au maximum à huit fois la dimension latérale.
